# EUROPÄISCHE PATENTSCHRIFT

(11) **EP 3 853 167 B1**
(45) Veröffentlichungstag und Bekanntmachung des Hinweises auf die Patenterteilung: **06.09.2023**
(21) Anmeldenummer: 19805218.5
(22) Anmeldetag: 13.11.2019
(51) Int. Cl.: B66C 23/88, B66C 23/94

(54) **KRAN MIT EINER ANTIKOLLISIONSEINRICHTUNG SOWIE VERFAHREN ZUM EINRICHTEN EINER SOLCHEN ANTIKOLLISIONSEINRICHTUNG**
CRANE WITH AN ANTI-COLLISION DEVICE, AND METHOD FOR INSTALLING SUCH AN ANTI-COLLISION DEVICE
GRUE AVEC UN DISPOSITIF ANTI-COLLISION AINSI QUE PROCÉDÉ DE RÉGLAGE D'UN TEL DISPOSITIF ANTI-COLLISION

(30) Priorität: 20.11.2018 DE 102018129227
(43) Veröffentlichungstag der Anmeldung: 28.07.2021
(73) Patentinhaber: Liebherr-Werk Biberach GmbH, 88400 Biberach an der Riss (DE)
(72) Erfinder: IRLE, Philip, 72070 Tübingen (DE)
(74) Vertreter: Thoma, Michael
(86) Internationale Anmeldenummer: PCT/EP2019/081180
(87) Internationale Veröffentlichungsnummer: WO 2020/104273

(56) Entgegenhaltungen:
- EP-A1- 2 520 532
- WO-A1-2009/084820
- FR-A1- 3 030 469
- US-A1- 2013 345 857
- US-A1- 2014 278 076

## Beschreibung

Die vorliegende Erfindung betrifft einen Kran mit einer Antikollisionseinrichtung, die vor Kranbewegungen, die zu Kollisionen führen können, warnt und/oder solche zu möglichen Kollisionen führende Kranbewegungen unterbindet. Die Erfindung betrifft weiterhin ein Verfahren zum Einrichten einer solchen Antikollisionseinrichtung eines Krans, der eine um eine aufrechte Kranachse drehbaren Ausleger aufweist, bei dem eine Kranposition und eine Kran-, insbesondere Auslegerausrichtung bestimmt werden.

Die US 2013/0345857 A1 beschreibt einen Turmdrehkran, an dessen Turm und an dessen Lasthaken jeweils ein GPS-Modul angebracht ist, um die Lasthakenposition relativ zur Krandrehachse zu bestimmen und einen Verfahrweg des Lasthakens zu berechnen, der potenzielle Kollisionen zu Gebäudekonturen und weiteren Kranen berücksichtigt. Ferner ist es aus der US 2014/0278076 A1 bekannt, an einem Turmdrehkran mehrere GPS-Module anzubringen, die beispielsweise am Ausleger, am Gegenausleger oder an einer Laufkatze angebracht sind, wobei aus den Daten der GPS-Module während einer Drehung des Krans die Turmdrehachse bestimmt wird, um dann später aus der bekannten Position der Turmdrehachse und den jeweiligen Signalen der GPS-Module die Auslegerausrichtung bestimmen zu können. Weitere Krane mit GPS-Modulen zum Bestimmen der Kranpositionen sind aus den Schriften EP 25 20 532 A1, WO 2009/084820 A1 und FR 30 30 469 A1

Das Dokument WO2009/084820A1 offenbart ein Verfahren bzw. einen Kran gemäß dem Oberbegriff von Anspruch 1, bzw. Anspruch 6.

Bei Kranen wie beispielsweise Turmdrehkranen müssen aus Sicherheitsgründen Kranbewegungen unterbunden werden, die zu Kollisionen führen könnten. Einerseits muss bei festen Hindernissen wie beispielsweise Gebäudeumrissen oder -fassaden der Arbeitsbereich des Krans generell beschränkt werden, sodass der Ausleger oder der Kranhaken mit einer daran angehängten Last nicht gegen das Hindernis verfahren werden kann. Eine entsprechende Arbeitsbereichsbegrenzung kann beispielsweise eine Beschränkung des Verdrehbereichs um die aufrechte Kranachse und/oder eine Beschränkung des Verfahrwegs der Laufkatze in einem bestimmten Drehwinkelbereich, oder auch andere Bewegungsbeschränkungen beinhalten.

Andererseits ist es bei mehreren Kranen auf einer Baustelle auch notwendig, den Arbeitsbereich eines Krans sozusagen dynamisch in Abhängigkeit der jeweiligen aktuellen Stellung eines anderen Krans zu beschränken. Eine generelle, fixe Beschränkung des Arbeitsbereichs der Krane im vorgenannten Sinne ist hierbei nicht möglich, da dann die mehreren Krane nicht mehr effizient arbeiten könnten. Wenn ein Kran mit seinem Ausleger auf den anderen Kran zugedreht wird, ist dies an sich - beispielsweise - noch kein Problem, solange der andere Kran sich nicht auch mit seinem Ausleger in den entsprechenden Bereich hineindreht.

Um solche Kranbewegungen, die zu möglichen Kollisionen führen können, unterbinden zu können bzw. zumindest einen Kranführer rechtzeitig warnen zu können, ist es notwendig, dass die Antikollisionseinrichtung die Kranposition und die Auslegerausrichtung relativ zu den potenziellen Hindernissen - sei es in Form eines festen Gebäudes oder eines beweglichen Krans - bzw. den Abstand des Krans und seines Auslegers hiervon kennt, um den Abstand gefährlich verringernde Kranbewegungen abschalten zu können bzw. einen Kranführer rechtzeitig vorher warnen zu können.

Eine solche Antikollisionseinrichtung beschreibt beispielsweise die Schrift DE 24 41 785 A1, die zur Erfassung der Abstände der Kranausleger mehrerer Krane voneinander diese Abstände der Kranausleger als Vektoren darstellt und aus der Differenz der Vektoren zueinander den Abstand zwischen den auf die horizontal projizierten Auslegerspitzen bzw. Auslegerteilstücken ermittelt.

Aus der Schrift EP 18 94 882 B1 ist ferner eine Antikollisionseinrichtung für Krane bekannt, die an sich in ähnlicher Weise Bewegungsvektoren bestimmt, diese allerdings nicht als Istwert bestimmt, sondern vorausschauend abschätzt, um frühzeitig in kollisionsgefährliche Bewegungen eingreifen zu können.

Das Einrichten der Antikollisionseinrichtungen solcher Krane ist bislang relativ aufwendig und fehleranfällig, wenn nicht mit der erforderlichen Sorgfalt gearbeitet wird. Üblicherweise wird hierbei mittels Lasermessgeräten die Entfernung der Krane voneinander, genauer gesagt die Beabstandung der Kranmittelpunkte beispielsweise in Form der Turmspitzen von Turmdrehkranen bestimmt. Die Ausrichtung der Krane zueinander, insbesondere die Ausrichtung der Ausleger zueinander muss zusätzlich bestimmt werden, was üblicherweise manuell erfolgt, indem die Krane manuell in eine bestimmte Relativstellung gebracht werden. Die entsprechenden Werte werden dann vom Sensor des Antikollisionssystems übernommen. Insgesamt ergibt sich hierdurch ein beträchtlicher Installationsaufwand. Zudem können sich sicherheitsrelevante Fehler ergeben, wenn die Messungen bzw. die manuelle Ausrichtungsbestimmung nicht sorgfältig von einer erfahrenen Kraft durchgeführt werden.

Hiervon ausgehend liegt der vorliegenden Erfindung die Aufgabe zugrunde, einen verbesserten Kran mit einer Antikollisionseinrichtung sowie ein verbessertes Verfahren zum Einrichten einer solchen Antikollisionseinrichtung zu schaffen, die Nachteile des Standes der Technik vermeiden und letzteren in vorteilhafterweise weiterbilden. Insbesondere soll eine weniger fehleranfällige, vom Zeitaufwand her reduzierte Einrichtung der Antikollisionseinrichtung eines Krans erreicht werden.

Erfindungsgemäß wird die genannte Aufgabe durch ein Verfahren gemäß Anspruch 1 sowie einem Kran gemäß Anspruch 6 gelöst. Bevorzugte Ausgestaltungen der Erfindung sind Gegenstand der abhängigen Ansprüche.

Es wird also vorgeschlagen, der Antikollisionseinrichtung die Kranposition und -ausrichtung mithilfe von Satellitennavigation und einer zusätzlichen Ausrichtungssensorik automatisiert bereitzustellen, um eine manuelle Abstandsmessung möglichst zu vermeiden. Erfindungsgemäß ist am Kran ein Satellitennavigationsmodul vorgesehen, mithilfe dessen die Kranposition automatisch bestimmt und in Form globaler Koordinaten der Antikollisionseinrichtung bereitgestellt wird. Die Ausrichtung des Krans wird mittels einer am Kran angeordneten Ausrichtungssensorik automatisch bestimmt und der Antikollisionseinrichtung in Form einer Richtung im globalen Koordinatensystem bereitgestellt. Die Bereitstellung der Positions- und Ausrichtungsdaten kann vollautomatisch erfolgen und direkt von der Antikollisionseinrichtung eingelesen werden. Alternativ oder zusätzlich können die Daten auch dem Kranführer auf einem Display angezeigt werden, um dem Kranführer bzw. einem Einrichter die Möglichkeit zur Überprüfung und gegebenenfalls Korrektur zu geben, bevor die angezeigten Daten dann halbautomatisiert durch Bestätigung dem Antikollisionssystem bereitgestellt werden.

Die genannte Ausrichtungssensorik zur Bestimmung der Ausrichtung des Kranauslegers kann grundsätzlich verschieden beschaffen sein. Beispielsweise kann ein Kompass am Kranausleger angebracht sein, um dessen Ausrichtung im globalen Koordinatensystem zu bestimmen, wobei der genannte Kompass vorteilhafterweise elektrisch ausgebildet sein und/oder ein elektrisches Signal bereitstellen kann, das die Ausrichtung wiedergibt.

Vorteilhafterweise wird aber auch das Navigationsmodul selbst dazu verwendet, um die Ausrichtung des Kranauslegers zu bestimmen, was an sich auf den ersten Blick wiedersinnig erscheint, da ein Satellitennavigationsmodul selbst nur eine Position und keine Ausrichtung bestimmen kann. Um diesen Wiederspruch aufzulösen, kann in vorteilhafter Weiterbildung der Erfindung das Satellitennavigationsmodul von der Krandrehachse beabstandet am Ausleger oder einem Gegenausleger des Krans oder einem anderen Kranelement wie beispielsweise dessen Ballast angebracht sein, sodass das genannte Navigationsmodul beim Verdrehen des Krans einen Kreisbogen um die Krandrehachse abfährt. Aus der sich ergebenden Kreisbahn und der sich dabei ergebenden Serie bzw. Abfolge von Positionsdaten kann die Ausrichtungssensorik den Mittelpunkt der Kreisbahn bestimmen, um aus dem dann bekannten Drehpunkt und der jeweils aktuellen Position des Navigationsmoduls die Ausrichtung des Auslegers zu bestimmen.

Beispielsweise kann die Ausrichtung über die Übernahme des nördlichsten Kreisbahnpunkts berechnet werden, wobei beispielsweise ein dem Drehwerk des Krans zugeordneter Drehwerksensor entsprechend kalibriert werden kann, wenn der besagte nördlichste Kreisbahnpunkt durchfahren bzw. erreicht wird, um dann anhand des Signals des Drehwerksensors stets aktuell die jeweilige Ausrichtung des Kranauslegers zu kennen bzw. berücksichtigen zu können.

Um aus der genannten Kreisbahn des Satellitennavigationsmoduls den Kreisbahnmittelpunkt und davon abgeleitet wiederum die Kranausrichtung bestimmen zu können, können per se bekannte Statistik- oder Optimierungsverfahren angewendet werden. Beispielsweise können mithilfe eines Least-Squares-Verfahren die die Kreisbahn repräsentierenden Positionsdaten ausgewertet und der Kreisbahnmittelpunkt sowie die entsprechende Kranausrichtung berechnet werden.

Alternativ oder zusätzlich kann die Kranausrichtung auch mithilfe zweier oder mehrerer Satellitennavigationsmodule bestimmt werden, die voneinander beabstandet beispielsweise am Ausleger des Krans oder am Ausleger und Gegenausleger des Krans oder an der Krandrehachse und einem davon beabstandeten Punkt am Ausleger oder Gegenausleger angebracht sein können. Werden beispielsweise zwei Satellitennavigationsmodule an der Spitze des Auslegers und dem rückseitigen Ende des Gegenauslegers angebracht, kann aus den beiden satellitengestützt bestimmten Positionen der Navigationsmodule die Kran- bzw. Auslegerausrichtung bestimmt werden, die sich als Gerade bzw. Verbindungslinie durch die beiden Positionen der beiden Navigationsmodule ergibt.

Zusätzlich zu der Bestimmung der Kranposition und -ausrichtung durch Satellitennavigation und gegebenenfalls zusätzliche Ausrichtungssensorik kann das Einrichten des Antikollisionssystems nach einem weiteren Aspekt der vorliegenden Erfindung auch dadurch beträchtlich vereinfacht werden, dass der Antikollisionseinrichtung die Kranposition in Form globaler Koordinaten automatisch aus einem Baustellendatenmodell bereitgestellt wird, wobei die genannten globalen Koordinaten aus dem Baustellendatenmodell beispielsweise im Sinne eines teilautomatisierten Verfahrensablaufs auf einem Display dem Kranführer bzw. einem Kraneinrichter bereitgestellt werden können, um überprüft und gegebenenfalls korrigiert bzw. durch Bestätigung der Antikollisionseinrichtung eingegeben werden können. Alternativ kann die Bereitstellung der genannten Daten-Antikollisionseinrichtung auch voll automatisiert erfolgen, wenn die Antikollisionseinrichtung beispielsweise über eine Datenkommunikationseinrichtung mit einem Baustellenleitrechner und/oder direkt mit einem Server, in dem das Baustellendatenmodell abgelegt ist, kommunizieren kann.

In Weiterbildung der Erfindung kann auch die Kranausrichtung in Form einer Richtungsangabe im globalen Koordinatensystem aus dem genannten Baustellendatenmodell automatisch bereitgestellt werden, beispielsweise in Form der Richtung, die vom jeweiligen Kranmittelpunkt auf den Mittelpunkt eines anderen Krans oder eines anderen Baustellenpunkts weist.

Auch wenn die Kranposition und/oder die Kranausrichtung mithilfe der Satellitennavigation und/oder aus dem Baustellendatenmodell in Form globaler Koordinaten ermittelt bzw. bereitgestellt werden, kann die Antikollisionseinrichtung selbst dann im Arbeitsbetrieb in einem lokalen Koordinatensystem arbeiten. Hierzu können beispielsweise aus den jeweils globalen Koordinaten der Mittelpunkte zweier oder dreier Krane deren Abstände relativ voneinander bestimmt werden. Ist die Kranausrichtung in Form einer Richtung im globalen Koordinatensystem angegeben bzw. bereitgestellt worden, kann ein Drehwerkssensor, der die Drehstellung des Krans um die aufrechte Achse erfasst, entsprechend kalibriert werden, so dass die Antikollisionseinrichtung dann mit dem lokalen Signal des Drehwerksensors arbeiten kann. Die Antikollisionseinrichtung und/oder ein damit verbundener Transformations-Baustein kann die entsprechende Umrechnung der globalen Koordinaten in einen jeweiligen Kranabstand und/oder in eine jeweilige Kranausrichtung automatisch vornehmen, sobald die genannten Daten in der beschriebenen Weise bereitgestellt wurden.

Soweit eine Redundanz beim Einrichten der Antikollisionseinrichtung gewünscht oder gefordert wird, können die Kranposition und/oder die Kranausrichtung jeweils auf verschiedene Weise bestimmt bzw. bereitgestellt werden, beispielsweise indem die Kranposition sowohl durch das Satellitennavigationsmodul bestimmt als auch aus dem Baustellendatenmodell bereitgestellt wird. Alternativ oder zusätzlich kann die Kranausrichtung sowohl durch einen elektrischen Kompass als auch durch das beschriebene Erfassen der Kranpositionen durch das Satellitennavigationsmodul beim Verdrehen des Krans bestimmt werden.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Darstellung eines Krans in Form eines Turmdrehkrans, der zum Einrichten seiner Antikollisionseinrichtung mit einem Satellitennavigationsmodul versehen ist, das beabstandet von der Krandrehachse am Gegenausleger angebracht ist, und
- Fig. 2:: eine Ansicht der Messwerte des Satellitennavigationsmoduls bei einer Drehung des Krans um seine aufrechte Krandrehachse.

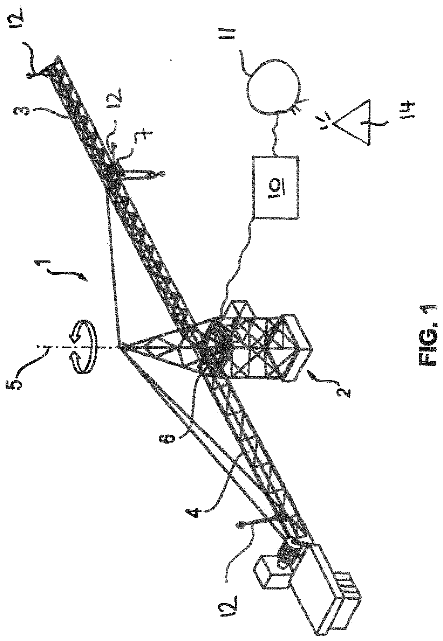

Wie Figur 1 zeigt, kann der Kran als Turmdrehkran 1 beispielsweise in Form eines sogenannten Obendrehers ausgebildet sein, dessen Turm 2 einen Ausleger 3 sowie einen Gegenausleger 4 trägt, die sich im Wesentlichen horizontal erstrecken und um die aufrechte Turmachse 5 relativ zum Turm 2 verdrehbar sind. Anstelle der in Figur 1 gezeigten Krankonfiguration könnte der Turmdrehkran 1 jedoch auch als Untendreher ausgebildet sein und/oder einen wippbaren Spitzenausleger umfassen und/oder über eine Abspannung zum Turmfuß bzw. Oberwagen hinabgespannt sein, wobei der Kran jedoch auch als Teleskopkran mit wippbaren Ausleger oder als Umschlags-Hafenkran ausgebildet sein könnte.

Um den Ausleger 3 drehen zu können, ist ein Drehwerk 6 vorgesehen, welches in der gezeigten Ausführung am oberen Ende des Turms 2 zwischen dem Ausleger 3 und dem Turm 2 vorgesehen ist und einen Zahnkranz umfassen kann, mit dem ein von einem Antriebsmotor 7 angetriebenes Antriebsrad kämmt.

An dem genannten Ausleger 3 kann eine Laufkatze 7 verfahrbar gelagert sein, wobei die genannte Laufkatze 7 über einen Katzantrieb verfahren werden kann. Über die genannte Laufkatze 7 läuft das Hubseil ab, an welchem ein Lasthaken 8 angeschlagen bzw. eingeschert ist. Der Lasthaken 8 kann über ein Hubwerk 9 abgelassen und angehoben werden.

Die genannten Kranbewegungen werden von einer Steuervorrichtung 10 des Krans 1 gesteuert, die die genannten Antriebe, insbesondere das Drehwerk 6, den Katzantrieb und das Hubwerk 9 ansteuert bzw. überwacht.

Ferner ist eine elektronische Antikollisionseinrichtung 11 vorgesehen, die mit der genannten Steuereinrichtung 10 verbunden oder gegebenenfalls auch hiervon gebildet sein kann bzw. darin implementiert sein kann. Die genannte Antikollisionseinrichtung 11 kann auch einen übergeordneten Baustein bilden, der mit Steuereinrichtungen weiterer Krane kommunizieren kann, die auf derselben Baustelle aufgestellt sind.

Ergeben sich oder drohen Kranbewegungen, die zu Kollisionen führen können, kann die genannte Antikollisionseinrichtung 11 in die jeweilige Steuervorrichtung 10 eingreifen, um die entsprechende Kranbewegung abzustellen, insbesondere das Drehwerk 6 und/oder das Hubwerk 9 und/oder den Katzantrieb stillzusetzen. Alternativ oder zusätzlich kann auch auf einem Display dem Kranführer ein entsprechendes Warnsignal angezeigt werden.

Um die genannte Antikollisionseinrichtung 11 einzurichten, wird die Kranposition, insbesondere die Position der Krandrehachse 5 mithilfe eines Satellitennavigationsmoduls 12 bestimmt, das von der genannten Krandrehachse 5 beabstandet am Ausleger 3 oder am Gegenausleger 4 montiert sein kann.

Da das Satellitennavigationsmodul 12 an sich nur eine Position in Form globaler Koordinaten und keine Ausrichtung bestimmen kann, wird beim Einrichten des Antikollisionssystems der Kran 1 um seine aufrechte Krandrehachse 5 verdreht, sodass das Satellitennavigationsmodul 12 entlang einer Kreisbahn um die Krandrehachse 5 verfahren wird.

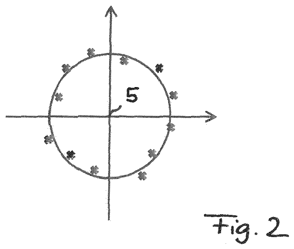

Die beim Verdrehen des Krans 1 um die Krandrehachse 5 gemessenen Positionen sind in Figur 2 dargestellt und ergeben zumindest näherungsweise die Kreisbahn des Satellitennavigationsmoduls 12 um die Krandrehachse 5 wieder.

Der Kranmittelpunkt bzw. die Position der Krandrehachse 5 kann durch Bestimmung des Mittelpunkts der Kreisbahn, die das Satellitennavigationsmodul 12 abgefahren ist, bestimmt werden. Die Ausrichtung des Krans kann beispielsweise über die Übernahme des nördlichsten Kreispunkts berechnet werden. Als Berechnungsmethoden können neben geometrischen Verfahren auch geeignete Statistik- oder Optimierungsverfahren wie insbesondere das Verfahren der Least-Squares angewendet werden.

Vorteilhafterweise kann hierdurch das Einrichten des Antikollisionssystems mithilfe nur eines Satellitennavigationsmoduls 12 erfolgen und die benötigte Hardware trotz automatisierten Einrichtens minimiert werden.

Alternativ oder zusätzlich aus Redundanzgründen kann die Kranposition und - ausrichtung jedoch auch in anderer Weise bestimmt werden. Beispielsweise können zwei Satellitennavigationsmodule verwendet werden, die voneinander beabstandet am Ausleger 3 und/oder am Gegenausleger 4 und/oder einerseits am Turm 2 und andererseits am Gegenausleger 4 bzw. Ausleger 3 angebracht sein können.

Gemäß der Erfindung ist ein Satellitennavigationsmodul 12 auch an der genannten Laufkatze 7 angebracht, um die Ausrichtung des Auslegers 3 in einfacher Weise durch Verfahren der Laufkatze 7 entlang des Auslegers 3 und der dabei gemessenen Positionen bestimmen zu können. Hierzu wird das Drehwerk 6 stillgesetzt und der Katzantrieb betätigt, sodass die vom Satellitennavigationsmodul 12 gemessenen Positionen zumindest näherungsweise entlang einer Geraden liegen, die durch beispielsweise ein statistisches Auswerteverfahren durch die Messpunkte gelegt werden kann. Die genannte Gerade entspricht dann der Ausrichtung des Kranauslegers 3.

Grundsätzlich kommt es auch in Betracht, den Satellitenempfänger 12 am Kranhaken anzubringen und die dabei gemessenen Positionen in entsprechender Weise auszuwerten, um die Position bzw. die Ausrichtung des Krans zu bestimmen.

Ferner kann der Antikollisionseinrichtung 11 die Kranposition und/oder die Kranausrichtung in Form globaler Koordinaten und/oder einer Richtung im globalen Koordinatensystem auch durch Eingabe an einem Display bzw. einer Eingabevorrichtung bereitgestellt werden, wobei die genannten globalen Koordinaten, die die Kranposition wiedergeben und/oder die globale Richtung, die die Kranausrichtung wiedergeben, aus einem Baustellendatenmodell 13 bereitgestellt werden. Das genannte Baustellenmodell 13 kann beispielsweise in einem Server wie einem Leitrechner gespeichert werden, wobei die Bereitstellung an das Antikollisionssystem beispielsweise über einen Baustellenleitrechner 14 und entsprechende Datenverbindungen erfolgen kann.

## Patentansprüche

1. Verfahren zum Einrichten einer Antikollisionseinrichtung (11) eines Krans (1), der einen um eine aufrechte Krandrehachse (5) drehbaren Ausleger (3) aufweist, bei dem eine Kranposition und eine Ausrichtung des Krans, insbesondere des Auslegers (3), bestimmt werden, wobei die Kranposition automatisch mittels eines Satellitennavigationsmoduls (12) am Kran (1) bestimmt und in Form globaler Koordinaten der Antikollisionseinrichtung (11) bereitgestellt wird, und die Ausrichtung des Krans mittels einer am Kran (1) angebrachten Ausrichtungssensorik (15) automatisch bestimmt und in Form einer Richtung im globalen Koordinatensystem der Antikollisionseinrichtung (11) bereitgestellt wird, **dadurch gekennzeichnet, dass** die Ausrichtung des Krans mithilfe des Satellitennavigationsmoduls (12) bestimmt wird, das an einer Laufkatze (7) des Krans angebracht ist, wobei die Laufkatze (7) bei stillgesetztem Drehwerk des Krans entlang des Auslegers (3) verfahren wird und durch die beim Verfahren der Laufkatze (7) gemessenen Positionen des Satellitennavigationsmoduls (12) eine Gerade bestimmt wird, die als Ausrichtung des Krans verwendet wird.

2. Verfahren nach dem vorhergehenden Anspruch, wobei die Ausrichtung des Krans mithilfe des Satellitennavigationsmoduls (12) bestimmt wird, das von der Krandrehachse (5) beabstandet am Kran (1) angebracht wird, wobei zur Ausrichtungsbestimmung der Kran (1) um seine Krandrehachse (5) verdreht wird und aus den während des Verdrehens des Krans (1) gemessenen Positionen des Satellitennavigationsmoduls (12) die Lage der Krandrehachse (5) und die Ausrichtung des Krans aus der jeweiligen Lage des Satellitennavigationsmoduls relativ zu der bestimmten Krandrehachse (5) von der Ausrichtungssensorik (15) bestimmt wird.

3. Verfahren nach dem vorhergehenden Anspruch, wobei aus den Messpunkten des Satellitennavigationsmoduls (12) beim Verdrehen des Krans (1) eine Kreisbahn bestimmt und der Mittelpunkt der Kreisbahn als Krandrehachse (5) bestimmt wird, wobei die genannten Messpunkte des Satellitennavigationsmoduls (12) mit einem geometrischen Auswerteverfahren und/oder einem statistischen Auswerteverfahren, insbesondere dem Least-Square-Verfahren, ausgewertet werden.

4. Verfahren nach einem der vorhergehenden Ansprüche, wobei die Ausrichtung des Krans (1) mithilfe zweier oder mehrerer Satellitennavigationsmodule (12) bestimmt wird, die voneinander beabstandet am Ausleger (3) und/oder am Gegenausleger (4) und/oder einerseits an einem Turm (2) und andererseits am Ausleger (3) oder Gegenausleger (4) angebracht sind, wobei die Ausrichtung des Krans als Verbindungslinie zwischen den Messpunkten der voneinander beabstandeten mehreren Satellitennavigationsmodulen bestimmt wird.

5. Verfahren nach einem der vorhergehenden Ansprüche, wobei die Kranposition automatisch in Form globaler Koordinaten und/oder einer Richtung im globalen Koordinatensystem aus einem Baustellendatenmodell (13) der Antikollisionseinrichtung (11) bereitgestellt werden.

6. Kran mit einem um eine aufrechte Krandrehachse (5) drehbaren Ausleger (3), von dem ein Lasthaken absenkbar ist, einer Steuervorrichtung (10) zum Steuern von Kranbewegungen, sowie einer Antikollisionseinrichtung (11) zum Überwachen der Kranbewegungen auf mögliche Kollisionen hin sowie zum Abschalten solcher Kranbewegungen und/oder Abgeben eines Warnsignals, wobei ein Satellitennavigationsmodul (12) zum Bestimmen der Kranposition am Kran (1) angebracht und eine Ausrichtungssensorik (15) zum Bestimmen einer Kranausrichtung in Form einer Richtung im globalen Koordinatensystem vorgesehen ist, wobei die Antikollisionseinrichtung (11) dazu ausgebildet ist, die von dem Satellitennavigationsmodul (12) bestimmte Kranposition in Form globaler Koordinaten und die von der Ausrichtungssensorik (15) bestimmte Ausrichtung des Krans zur Kollisionsüberwachung zu verwenden, **dadurch gekennzeichnet, dass** das Satellitennavigationsmodul (12) an einer Laufkatze des Krans angebracht ist und die Ausrichtungssensorik (15) dazu ausgebildet ist, die Ausrichtung des Krans dadurch zu bestimmen, dass die Laufkatze (7) bei stillgesetztem Drehwerk des Krans entlang des Auslegers (3) verfahren wird und durch die beim Verfahren der Laufkatze (7) gemessenen Positionen des Satellitennavigationsmoduls (12) eine Gerade bestimmt wird, die als Ausrichtung des Krans verwendet wird.

## Claims

1. A method of installing an anti-collision device (11) of a crane (1) that has a boom (3) rotatable about an upright crane axis of rotation (5), in which a crane position and an orientation of the crane, in particular of the boom (3) are determined, wherein the crane position is automatically determined by means of a satellite navigation module (12) at the crane (1) and is provided to the anti-collision device (11) in the form of global coordinates and the orientation of the crane is automatically determined by means of an orientation sensor system (15) attached to the crane (1) and is provided to the anti-collision device (11) in the form of a direction in the global coordinate system, **characterized in that** the orientation of the crane is determined by means of the satellite navigation module (12) that is attached to a trolley (7) of the crane (1), with the trolley (7) being traveled along the boom (3) with a stopped slewing gear of the crane and with a straight line that is used as the orientation of the crane being determined by the positions of the satellite navigation module (12) measured on the traveling of the trolley (7).

2. A method in accordance with the preceding claim, wherein the orientation of the crane is determined by means of the satellite navigation module (12) that is attached to the crane (1) spaced apart from the crane axis of rotation (5), with the crane (1) being rotated about its crane axis of rotation (5) for the orientation determination and the location of the crane axis of rotation (5) being determined from the positions of the satellite navigation module (12) measured during the rotation of the crane (1) and the orientation of the crane being determined by the orientation sensor system (15) from the respective location of the satellite navigation module relative to the determined crane axis of rotation (5).

3. A method in accordance with the preceding claim, wherein a circular path is determined from the measurement points of the satellite navigation module (12) on the rotation of the crane (1) and the center of the circular path is determined as the crane axis of rotation (5), with said measurement points of the satellite navigation module (12) being evaluated by a geometrical evaluation method and/or a statistical evaluation method, in particular the least square method.

4. A method in accordance with one of the preceding claims, wherein the orientation of the crane (1) is determined with the aid of two or more satellite navigation modules (12) that are attached spaced apart from one another to the boom (3) and/or to the counterboom (4) and/or to a tower (2) on the one hand and to the boom (3) or counterboom (4) on the other hand, with the orientation of the crane being determined as a connection line between the measurement points of the plurality of satellite navigation modules spaced apart from one another.

5. A method in accordance with one of the preceding claims, wherein the crane position is provided to the anti-collision device (11) automatically in the form of global coordinates and/or of a direction in the global coordinate system from a construction site data model (13).

6. A crane having a boom (3) that is rotatable about an upright crane axis of rotation (5) and from which a lifting hook can be lowered, having a control device (10) for controlling crane movements, and having an anti-collision device (11) for monitoring the crane movements for possible collisions and for disabling such crane movements and/or for outputting a warning signal, wherein a satellite navigation module (12) is attached to the crane (1) to determine the crane position and an orientation sensor system (15) is provided to determine a crane orientation in the form of a direction in the global coordinate system, with the anti-collision device (11) being configured to use the crane position determined by the satellite navigation module (12) in the form of global coordinates and to use the orientation of the crane determined by the orientation sensor system (15) for collision monitoring, **characterized in that** the satellite navigation module (12) is attached to a trolley of the crane and the orientation sensor system (15) is configured to determine the orientation of the crane **in that** the trolley (7) is traveled along the boom (3) with a stopped slewing gear of the crane and a straight line that is used as the orientation of the crane is determined by the positions of the satellite navigation module (12) measured on the traveling of the trolley (7).

## Revendications

1. Procédé de réglage d'un dispositif anticollision (11) d'une grue (1), qui présente une flèche (3) rotative autour d'un axe vertical de rotation de grue (5), dans lequel une position de grue et une orientation de la grue, en particulier de la flèche (3), sont déterminées, la position de grue étant déterminée automatiquement au moyen d'un module de navigation par satellite (12) situé sur la grue (1) et fournie au dispositif anticollision (11) sous la forme de coordonnées globales, et l'orientation de la grue étant déterminée automatiquement au moyen d'un système de détection d'orientation (15) monté sur la grue (1) et fournie au dispositif anticollision (11) sous la forme d'une direction dans le système de coordonnées global, **caractérisé en ce que** l'orientation de la grue est déterminée à l'aide du module de navigation par satellite (12), qui est monté sur un chariot roulant (7) de la grue, le chariot roulant (7) étant déplacé le long de la flèche (3) lorsque le dispositif de rotation de la grue est à l'arrêt et une droite étant déterminée par les positions du module de navigation par satellite (12) mesurées lors du déplacement du chariot roulant (7), ladite droite étant utilisée comme orientation de la grue.

2. Procédé selon la revendication précédente, dans lequel l'orientation de la grue est déterminée à l'aide du module de navigation par satellite (12), qui est monté sur la grue (1) espacé de l'axe de rotation de grue (5), la grue (1) étant tournée autour de son axe de rotation de grue (5) pour la détermination de l'orientation et, à partir des positions du module de navigation par satellite (12) mesurées pendant la rotation de la grue (1), la position de l'axe de rotation de grue (5) et l'orientation de la grue étant déterminées par le système de détection d'orientation (15) à partir de la position respective du module de navigation par satellite par rapport à l'axe de rotation de grue (5) déterminé.

3. Procédé selon la revendication précédente, dans lequel une trajectoire circulaire est déterminée à partir des points de mesure du module de navigation par satellite (12) lors de la rotation de la grue (1) et le centre de la trajectoire circulaire est déterminé comme axe de rotation de grue (5), lesdits points de mesure du module de navigation par satellite (12) étant évalués au moyen d'un procédé d'évaluation géométrique et/ou d'un procédé d'évaluation statistique, en particulier de la méthode des moindres carrés.

4. Procédé selon l'une des revendications précédentes, dans lequel l'orientation de la grue (1) est déterminée à l'aide de deux modules de navigation par satellite (12) ou plus, qui sont montés espacés entre eux sur la flèche (3) et/ou sur la contre-flèche (4) et/ou d'une part sur une tour (2) et d'autre part sur la flèche (3) ou la contre-flèche (4), l'orientation de la grue étant déterminée comme ligne de jonction entre les points de mesure des plusieurs modules de navigation par satellite espacés entre eux.

5. Procédé selon l'une des revendications précédentes, dans lequel la position de grue est fournie automatiquement au dispositif anticollision (11) sous la forme de coordonnées globales et/ou d'une direction dans le système de coordonnées global à partir d'un modèle de données de chantier (13).

6. Grue comportant une flèche (3) rotative autour d'un axe vertical de rotation de grue (5), flèche depuis laquelle un crochet porte-charge peut être descendu, un dispositif de commande (10) destiné à commander des mouvements de grue, ainsi qu'un dispositif anticollision (11) destiné à surveiller les mouvements de grue pour détecter des collisions possibles ainsi qu'à désactiver ces mouvements de grue et/ou émettre un signal d'avertissement, un module de navigation par satellite (12) étant monté sur la grue (1) pour déterminer la position de grue et un système de détection d'orientation (15) destiné à déterminer une orientation de grue sous la forme d'une direction dans le système de coordonnées global étant prévu, le dispositif anticollision (11) étant conçu pour utiliser, pour la surveillance anticollision, la position de grue déterminée par le module de navigation par satellite (12) sous la forme de coordonnées globales et l'orientation de la grue déterminée par le système de détection d'orientation (15), **caractérisé en ce que** le module de navigation par satellite (12) est monté sur un chariot roulant de la grue et le système de détection d'orientation (15) est conçu pour déterminer l'orientation de la grue par le fait que le chariot roulant (7) est déplacé le long de la flèche (3) lorsque le dispositif de rotation de la grue est à l'arrêt et qu'une droite est déterminée par les positions du module de navigation par satellite (12) mesurées lors du déplacement du chariot roulant (7), ladite droite étant utilisée comme orientation de la grue.
